# EUROPÄISCHE PATENTSCHRIFT

(11) **EP 3 601 827 B1**
(45) Veröffentlichungstag und Bekanntmachung des Hinweises auf die Patenterteilung: **29.12.2021**
(21) Anmeldenummer: 18707869.6
(22) Anmeldetag: 19.02.2018
(51) Int. Cl.: F16D 3/12, F16D 3/52, F16D 13/69, F16D 25/0638, F16D 25/12

(54) **KOPPLUNGSANORDNUNG FÜR DEN ANTRIEBSSTRANG EINES FAHRZEUGES**
COUPLING ARRANGEMENT FOR THE DRIVE TRAIN OF A VEHICLE
AGENCEMENT D'ACCOUPLEMENT POUR LA TRANSMISSION D'UN VÉHICULE

(30) Priorität: 21.03.2017 DE 102017204725
(43) Veröffentlichungstag der Anmeldung: 05.02.2020
(73) Patentinhaber: ZF Friedrichshafen AG, 88046 Friedrichshafen (DE)
(72) Erfinder: KUNDERMANN, Wolfgang, 65599 Dornburg-Dorndorf (DE); KRÄNZEL, Susanne, 97714 Oerlenbach (DE)
(74) Vertreter: ZF Friedrichshafen AG
(86) Internationale Anmeldenummer: PCT/EP2018/053966
(87) Internationale Veröffentlichungsnummer: WO 2018/171994

(56) Entgegenhaltungen:
- WO-A1-87/03348
- DE-A1- 4 116 051
- DE-A1-102013 206 217
- DE-A1-102015 212 662
- DE-A1-102015 215 829
- US-A1- 2008 006 501
- US-A1- 2016 215 830

## Beschreibung

Die Erfindung betrifft eine Kopplungsanordnung für den Antriebsstrang eines Fahrzeuges mit einem Kupplungsgehäuse, versehen mit einer Kupplungsvorrichtung, die antriebsseitige Kupplungseinheiten, die mit einem gegenüber dem Kupplungsgehäuse drehfesten antriebsseitigen Kupplungseinheitenträger in Wirkverbindung stehen, abtriebsseitige Kupplungseinheiten, die über einen abtriebsseitigen Kupplungseinheitenträger mit einem Abtrieb in Wirkverbindung stehen, sowie eine Anpresseinrichtung, durch welche eine Wirkverbindung zwischen den antriebsseitigen Kupplungseinheiten und den abtriebsseitigen Kupplungseinheiten herstellbar oder aufhebbar ist, aufweist, wobei der Kupplungsvorrichtung Trennelemente für Kupplungseinheiten zugeordnet sind, die auf jeweils zueinander benachbarte Kupplungseinheiten der jeweils gleichen Kupplungseinheitengruppe einwirken, um die Kupplungseinheiten dieser Kupplungseinheitengruppe mit Axialkräften in voneinander fortweisender Richtung zu beaufschlagen.

Eine derartige Kopplungsanordnung ist aus der WO 87/03348 A1 bekannt. Der antriebsseitige Kupplungseinheitenträger ist durch im Kupplungsgehäuse befestigte Zapfen gebildet, die gemeinsam eine Verzahnung bilden, mit welcher eine Verzahnung der antriebsseitigen Kupplungseinheiten drehfest verbunden ist. Der abtriebsseitige Kupplungseinheitenträger steht in Wirkverbindung mit einem Abtrieb, wie einer Getriebeeingangswelle, und nimmt über eine Verzahnung die abtriebsseitigen Kupplungseinheiten drehfest auf. An den abtriebsseitigen Kupplungseinheiten stützen sich, jeweils beidseitig, Trennelemente in Form von Tellerfedern ab, so dass jeweils ein Axialfedernpaar ein Trennelementenpaar bildet. Die Axialfedern greifen mit freien Enden, die von der jeweiligen Abstützstelle an den abtriebsseitigen Kupplungseinheiten abgewandt sind, axial zwischen je zwei zueinander benachbarte antriebsseitige Kupplungseinheiten, aber auch zwischen eine antriebsseitige Kupplungseinheit und das zu dieser benachbarte Kupplungsgehäuse, um die Kupplungseinheiten in voneinander fortweisender Richtung zu verlagern, und um die zum Kupplungsgehäuse benachbarte antriebsseitige Kupplungseinheit vom Kupplungsgehäuse zu trennen. Die Anpresseinrichtung muss folglich zum Einrücken der Kupplungsvorrichtung die Kraft der Axialfedern überwinden.

Die bekannte Kopplungsanordnung muss ohne Maßnahmen zur Erzeugung einer Zwangsströmung auskommen, so dass lokale Überhitzungen insbesondere im radialen Erstreckungsbereich insbesondere dann nicht vermeidbar sein dürften, wenn die Kupplungseinheiten mit einer Relativdrehbewegung betrieben werden, also insbesondere beim Ein- oder Ausrücken der Kopplungsanordnung, oder beim Betrieb mit gezieltem Schlupf. Weiterhin ist festzustellen, dass die antriebsseitigen Kupplungseinheiten, ebenso wie das Kupplungsgehäuse, Abschnitte zur Aufnahme der freien Enden der Axialfedern aufweisen. Da sich diese Abschnitte an den von den Verzahnungen der antriebsseitigen Kupplungseinheiten abgewandten Radialenden der antriebsseitigen Kupplungseinheiten befinden, üben die Axialfedern Biegemomente auf die antriebsseitigen Kupplungseinheiten aus, die zu Verkantungen im Bereich der Verzahnung der jeweiligen Kupplungseinheit mit dem antriebsseitigen Kupplungseinheitenträger und damit zur Behinderung einer axialen Relativbewegung der Kupplungseinheiten gegenüber dem antriebsseitigen Kupplungseinheitenträger führen können.

Der Erfindung liegt die Aufgabe zugrunde, eine Kopplungsanordnung derart auszubilden, dass auch bei einer Relativdrehbewegung zwischen An- und Abtriebsseite lokale Überhitzungen wirksam vermeidbar sind.

Zur Lösung dieser Aufgabe ist eine Kopplungsanordnung, gemäß Anspruch 1, für den Antriebsstrang eines Fahrzeuges vorgesehen mit einem Kupplungsgehäuse, versehen mit einer Kupplungsvorrichtung, die antriebsseitige Kupplungseinheiten, die mit einem gegenüber dem Kupplungsgehäuse drehfesten antriebsseitigen Kupplungseinheitenträger in Wirkverbindung stehen, abtriebsseitige Kupplungseinheiten, die über einen abtriebsseitigen Kupplungseinheitenträger mit einem Abtrieb in Wirkverbindung stehen, sowie eine Anpresseinrichtung, durch welche eine Wirkverbindung zwischen den antriebsseitigen Kupplungseinheiten und den abtriebsseitigen Kupplungseinheiten herstellbar oder aufhebbar ist, aufweist, wobei der Kupplungsvorrichtung Trennelemente für Kupplungseinheiten zugeordnet ist, die auf jeweils zueinander benachbarte Kupplungseinheiten der jeweils gleichen Kupplungseinheitengruppe einwirkt, um die Kupplungseinheiten dieser Kupplungseinheitengruppe mit Axialkräften in voneinander fortweisender Richtung zu beaufschlagen.

Erfindungsgemäß ist die Kupplungsvorrichtung mit wenigstens einem im Kupplungsgehäuse gegenüber demselben zumindest im Wesentlichen drehfest positionierten Förderelement für im Kupplungsgehäuse enthaltenes Fördermedium versehen, wobei das wenigstens eine Förderelement zusammen mit den Trennelementen für Kupplungseinheiten eine Trennfördereinrichtung bildet.

Ferner, erfindungsgemäß , ist die wenigstens eine Trennfördereinheit zur Bildung des wenigstens einen Förderelementes mit zumindest einer Beschaufelung versehen.

Das wenigstens eine zusammen mit den Trennelementen die Trennfördereinrichtung bildende Förderelement wirkt als hydrodynamische Pumpe, die zumindest im Erstreckungsbereich der Kupplungseinheiten der Kupplungsvorrichtung für eine Zwangsströmung des im Kupplungsgehäuse der Kopplungsanordnung enthaltenen Fördermediums und damit für eine intensive Kühlung der Kupplungseinheiten sorgt, und ist erfindungsgemäß mit zumindest einer Beschaufelung versehen. Da das wenigstens eine Förderelement gegenüber dem Gehäuse der Kopplungsanordnung zumindest im Wesentlichen drehfest positioniert ist, und dieses Gehäuse der Kopplungsanordnung zumindest im Wesentlichen drehfest mit einem Antrieb, wie der Kurbelwelle einer Brennkraftmaschine, ist, wird dieses Förderelement folglich zumindest im Wesentlichen mit Antriebsdrehzahl bewegt. Ragt dieses wenigstens eine Förderelement nun in einen Bereich des Gehäuses der Kopplungsanordnung, in welchem Komponenten der Kopplungsanordnung mit geringerer Drehzahl als der Antriebsdrehzahl bewegt werden, wie beispielsweise Elemente eines Torsionsschwingungsdämpfers, die insbesondere im Verbindungsbereich mit einem Abtrieb, wie einer Getriebeeingangswelle, zumindest im Wesentlichen mit Abtriebsdrehzahl rotieren, oder wie der abtriebsseitige Kupplungseinheitenträger und die abtriebsseitigen Kupplungseinheiten, wird eine maximale Förderwirkung des wenigstens einen Förderelementes bei maximaler Relativdrehzahl erzielt. Dies ist beispielsweise dann der Fall, wenn die Abtriebsdrehzahl bei Stillstand eines Fahrzeuges zumindest näherungsweise bei Null liegt, während der Antrieb für einen Anfahrvorgang betätigt wird, die Kupplungsvorrichtung aber zumindest im Wesentlichen noch ausgerückt ist. Ausgerückt ist die Kupplungsvorrichtung dann, wenn die mit einem antriebsseitigen Kupplungseinheitenträger in Wirkverbindung stehenden, antriebsseitigen Kupplungseinheiten mit den mit einem abtriebsseitigen Kupplungseinheitenträger in Wirkverbindung stehenden abtriebsseitigen Kupplungseinheiten mittels der Anpresseinrichtung noch nicht in

Wirkverbindung miteinander gebracht sind. Sobald mittels der Anpresseinrichtung eine Wirkverbindung zwischen den antriebsseitigen Kupplungseinheiten und den abtriebsseitigen Kupplungseinheiten erzeugt wird, gleichen sich Antriebsdrehzahl und Abtriebsdrehzahl aneinander an, wodurch die Relativdrehzahl zwischen Antrieb und Abtrieb und damit die Pumpwirkung der Förderelemente sinkt. Die Pumpwirkung wird vernachlässigbar, wenn die die Kupplungsvorrichtung zumindest im Wesentlichen eingerückt ist. Dies ist dann der Fall, wenn die antriebsseitigen Kupplungseinheiten mit den abtriebsseitigen Kupplungseinheiten soweit in Wirkverbindung getreten sind, dass nahezu keine Relativdrehzahl zwischen den Kupplungseinheiten mehr besteht. Da zu Beginn eines Einrückens wegen der vergleichsweise hohen Differenzdrehzahl zwischen den antriebsseitigen Kupplungseinheiten und den abtriebsseitigen Kupplungseinheiten reibungsbedingt ein relativ großer Wärmeeintrag in die Kupplungseinheiten besteht, während gegen Ende eines Einrückens wegen der vergleichsweise geringen Differenzdrehzahl zwischen den antriebsseitigen Kupplungseinheiten und den abtriebsseitigen Kupplungseinheiten ein relativ geringer Wärmeeintrag in die Kupplungseinheiten besteht, verschafft das wenigstens eine Förderelement die Möglichkeit einer bedarfsgerechten Kühlung der Kupplungseinheiten mittels eines entsprechenden Stroms an Fördermedium.

Wenn die Trennelemente der zumindest einen Trennfördereinheit der Trennfördereinrichtung ebenso wie die Mitnehmer der zu den Trennelementen axial benachbarten Kupplungseinheiten jeweils in eine Aussparung eines Kupplungseinheitenträgers, hierbei insbesondere jeweils eine Aussparung im antriebsseitigen Kupplungseinheitenträger, eingreifen, wird im Erstreckungsbereich der Aussparungen und damit des Kupplungseinheitenträgers eine Überlappung zwischen den Trennelementen und den Mitnehmern erzeugt, ohne hierzu einen Mehrbedarf an Bauraum zu erfordern. Ideal ist, wenn die Trennelemente der jeweiligen Trennfördereinheit mit Radialversatz gegenüber den jeweiligen Kupplungseinheiten angeordnet sind, und soweit in Richtung zu den Kupplungseinheiten ragen, dass die Trennelemente bis nahezu an den Übergang der Mitnehmer dieser Kupplungseinheiten in den Reibbereich herangeführt sind. In diesem Fall entsteht die größtmögliche Überdeckung zwischen den Trennelementen der zumindest einen Trennfördereinheit und dem jeweils zugeordneten Mitnehmer der entsprechenden Kupplungseinheiten, was eine geringe Flächenpressung sicherstellt. Überdies wirken die Trennelemente unmittelbar auf die Mitnehmer der betreffenden Kupplungseinheiten, und übertragen dadurch nahezu frei von Biegemomenten die Axialkraft auf die Kupplungseinheiten.

In vorteilhafter Ausführung verfügt die zumindest eine Trennfördereinheit der Trennfördereinrichtung über einen Trägerteil, welcher mit einer Mehrzahl von Trennelementen und mit einer Mehrzahl von Förderelementen versehen ist, wobei die Trennelemente und die Förderelemente an einem ersten Umfangsabschnitt mit Umfangsabständen gegenüber den jeweils benachbarten Trennelementen und/oder Förderelementen vorgesehen sind, die sich von den Umfangsabständen der Trennelemente oder der Förderelemente an wenigstens einem weiteren Umfangsabschnitt des Trägerteils unterscheiden. Dadurch ergibt sich eine Folge von Trennelementen oder Beschaufelungen mit unterschiedlichen Umfangsabständen. Durch diese Maßnahme kann der jeweilige Trägerteil nur in einer bestimmten Richtung in die Kupplungsanordnung eingesetzt werden, so dass Montagefehler wirksam vermieden werden. Zum Trägerteil der wenigstens einen Trennfördereinheit ist zu ergänzen, dass dieser vorzugsweise eine Zentralachse des Kupplungsgehäuses ringförmig umschließen kann.

Bei einer Ausführung der Trennfördereinrichtung mit zumindest einem Trennfördereinheitenpaar ist eine axial kompakte Anordnung der Trennfördereinheiten insbesondere dann gegeben, wenn die einzelnen Trennfördereinheiten des jeweiligen Trennfördereinheitenpaares bezogen auf eine quer zu einer Zentralachse verlaufende axialen Mittenebene spiegelbildlich zueinander angeordnet sind. Eine derartige Anordnung der einzelnen Trennfördereinheiten des jeweiligen Paares von Trennfördereinheiten ist insbesondere dann von Vorteil, wenn sich die zumindest eine Beschaufelung in Bezug auf eine axiale Mittenebene der jeweiligen Trennfördereinheit in einer ersten Achsrichtung zumindest im Wesentlichen weiter erstreckt als in einer hierzu entgegengesetzten zweiten Achsrichtung. Mit besonderem Vorzug greift dann die zumindest eine Beschaufelung einer ersten Trennfördereinheit mit ihrer in Achsrichtung zumindest im Wesentlichen weiteren Erstreckung jeweils in Richtung zu einer zweiten Trennfördereinheit, so dass das jeweilige Paar von Trennfördereinheiten in Achsrichtung trotz hinreichender Beschaufelungsgröße kompakt bemessen sein kann.

Ist die Trennfördereinrichtung dagegen lediglich mit jeweils singulären Trennfördereinheiten ausgebildet, oder ergänzt eine singuläre Trennfördereinheit zumindest ein Trennfördereinheitenpaar, dann erstreckt sich die zumindest eine Beschaufelung in Bezug auf die axiale Mitte der wenigstens einen Trennfördereinheit in einer ersten Achsrichtung zumindest im Wesentlichen ebenso weit wie in einer hierzu entgegengesetzten zweiten Achsrichtung. Auf diese Weise wird ein möglichst geringer axialer Überstand der Beschaufelung gegenüber der jeweiligen Trennfördereinheit erzielt.

Ungeachtet der jeweiligen Ausgestaltung der Beschaufelung kann diese in einer zweiten Funktion durch Radialanlage an dem antriebsseitigen Kupplungseinheitenträger oder an zumindest einer antriebsseitigen Kupplungseinheit zur Zentrierung der entsprechenden Trennfördereinheit der Trennfördereinrichtung bezüglich des Kupplungsgehäuses genutzt werden. Da auch der die antriebsseitigen Kupplungseinheiten zentrierende antriebsseitige Kupplungseinheitenträger gegenüber dem Kupplungsgehäuse zentriert ist, ergibt sich damit eine Gesamtanordnung, bei welcher zwischen der wenigstens einen Trennfördereinheit und dem antriebsseitigen Kupplungseinheitenträger zum einen und zwischen den antriebsseitigen Kupplungseinheiten und dem antriebsseitigen Kupplungseinheitenträger zum anderen keine Relativbewegungen in radialer Erstreckungsrichtung der wenigstens einen Trennfördereinheit und der antriebsseitigen Kupplungseinheiten bestehen. Dadurch ist ein Verschleiß an den Trennelementen der wenigstens einen Trennfördereinheit sowie an jeweils zugeordneten Mitnehmern der antriebsseitigen Kupplungseinheiten wirksam vermieden.

Mit Vorzug sind Trennelemente an der wenigstens einen Trennfördereinheit der Trennfördereinrichtung jeweils zu einem Trennelementenpaar zusammengefasst, wobei jeweils zwei Trennelemente gegeneinander verschränkt an der wenigstens einen Trennfördereinheit vorgesehen sind. Dadurch springt wenigstens jeweils ein erstes Trennelement bezogen auf eine axiale Mittenebene der wenigstens einen Trennfördereinheit in Richtung zu einer der beiden benachbarten Baueinheiten und wenigstens jeweils ein zweites Trennelement bezogen auf die axiale Mittenebene der wenigstens einen Trennfördereinheit in Richtung zur anderen der beiden benachbarten Baueinheiten vor.

Die jeweilige Trenneinheit erbringt durch die Beaufschlagung jeweils zueinander benachbarter Kupplungseinheiten mit Axialkräften in voneinander fortweisender Richtung folgende Vorteile:
Beim Einrücken der Kupplungsvorrichtung, also dann, wenn durch Einleitung einer Axialkraft über die Anpresseinrichtung die antriebsseitigen Kupplungseinheiten mit den abtriebsseitigen Kupplungseinheiten zumindest teilweise in Wirkverbindung gebracht werden, muss an der von den Kupplungseinheiten abgewandten Seite der Anpresseinrichtung ein Überdruck aufgebaut werden, um die Anpresseinrichtung in Richtung zu den Kupplungseinheiten axial zu verlagern und damit die besagte Axialkraft auf die Kupplungseinheiten zu leiten. Diesem Druckgefälle sind nicht nur Reibungseinflüsse überlagert, die sich insbesondere am Bewegungsbeginn der Anpresseinrichtung bemerkbar machen, sondern auch Toleranzeinflüsse, wie beispielsweise Dickenschwankungen an den beteiligten Kupplungseinheiten, und zwar insbesondere im unmittelbaren Umgebungsbereich der Anpresseinrichtung, die eine unkoordinierte Bewegung in Richtung zu den Kupplungseinheiten entstehen lassen können. Die Wirkung der besagten Einflüsse lässt sich zumindest reduzieren, wenn das Einrücken der Kupplungsvorrichtung gegen die Wirkung eines Energiespeichers erfolgt, der im Fall der Trennelementenpaare durch die zwischen zueinander benachbarten Kupplungseinheiten wirksamen Trennelemente gebildet ist. Da die Trennelemente die jeweils zueinander benachbarten Kupplungseinheiten mit Axialkräften in voneinander fortweisender Richtung beaufschlagen, muss die Anpresseinrichtung beim Einrücken der Kupplungsvorrichtung auch den durch die Trennelementenpaare aufgebauten zusätzlichen Widerstand überwinden. Mit besonderem Vorzug sollten daher die Trennelementenpaare über eine geeignete Kraft-Weg-Kennlinie verfügen. Auf diese Weise wird ein toleranzbedingtes Anfahrruckeln wirksam vermieden.

Beim Ausrücken der Kupplungsvorrichtung, also dann, wenn durch Reduzierung der von der Anpresseinrichtung ausgeübten Anpresskraft die Wirkverbindung zwischen den antriebsseitigen Kupplungseinheiten und den abtriebsseitigen Kupplungseinheiten zumindest teilweise aufgehoben wird, muss an der den Kupplungseinheiten zugewandten Seite der Anpresseinrichtung ein Überdruck aufgebaut werden, um die Anpresseinrichtung in von den Kupplungseinheiten axial fortweisender Richtung zu verlagern und damit die besagte Axialkraft auf die Kupplungseinheiten zu reduzieren oder gar völlig aufzuheben. Sollten hierbei die Kupplungseinheiten nicht vollständig voneinander getrennt werden, ist von verlustbegünstigenden Schleppmomenten zwischen den Kupplungseinheiten auszugehen. Auch diesbezüglich ergibt sich eine vorteilhafte Wirkung der jeweiligen Trennelementenpaare, indem diese jeweils zueinander benachbarte Kupplungseinheiten mit Axialkräften in voneinander fortweisender Richtung beaufschlagen und dadurch vollständig trennen.

Mit Vorzug verfügt die Trennfördereinrichtung über eine Mitnahmeanordnung, welche für eine drehfeste Verbindung der jeweiligen Trennfördereinheit mit dem antriebsseitigen Kupplungseinheitenträger und /oder mit der Anpresseinrichtung zuständig ist. Da der antriebsseitige Kupplungseinheitenträger gegenüber dem Kupplungsgehäuse drehfest ist, werden aufgrund des durch die Mitnahmeanordnung hergestellten Verbundes auch die zumindest eine Trennfördereinheit und/oder die Anpresseinrichtung drehfest mit dem Kupplungsgehäuse verbunden. Bei Rotation des Kupplungsgehäuses um eine Zentralachse werden folglich der antriebsseitige Kupplungseinheitenträger sowie die zumindest eine Trennfördereinheit und /oder die Anpresseinrichtung bewegungsgleich nachgeführt. Im Vergleich hierzu folgt der abtriebsseitige Kupplungseinheitenträger und damit die abtriebsseitigen Kupplungseinheiten bewegungsgleich mit einer Rotation geringerer Drehzahl, so dass bei Zugbetrieb, also bei antriebsseitig höherer Drehzahl gegenüber einer abtriebsseitigen Drehzahl, ein Druckgefälle im Kupplungsgehäuse erzeugt wird, durch welches im Kupplungsgehäuse enthaltenes Fördermedium in wenigstens einen Strömungsdurchgang der Mitnahmeanordnung gesaugt wird, um von dort aus nach radial außen gefördert zu werden. Sind die Kupplungseinheiten der Kupplungsvorrichtung radial außerhalb der zumindest einen Trennfördereinheit angeordnet, so wird das Fördermedium durch den wenigstens einen Strömungsdurchgang der Mitnahmeanordnung unmittelbar zu den Kupplungseinheiten gefördert, an welchen bei Relativdrehbewegung Reibungswärme entsteht. Das Fördermedium ist damit in die Lage versetzt, die Kupplungseinheiten intensiv zu kühlen. Die Rückbewegung der Strömung nach radial innen erfolgt dann auf der Seite des abtriebsseitigen Kupplungseinheitenträgers.

Auf besonders einfache Weise kann die gewünschte Strömung des Fördermediums erzielt werden, wenn die Mitnahmeanordnung der Fördereinrichtung wenigstens einen Strömungsdurchgang aufweist, welcher für die drehfeste Verbindung der jeweiligen Drehfördereinheit mit dem antriebsseitigen Kupplungseinheitenträger und/oder mit der Anpresseinrichtung in eine entsprechende Aussparung des antriebsseitigen Kupplungseinheitenträgers und/oder der Anpresseinrichtung eingreift. Aufgrund dieser Konstruktion wird ein ohnehin notwendiger Strömungsdurchgang für eine Zweitfunktion genutzt, nämlich für die drehfeste Verbindung des antriebsseitigen Kupplungseinheitenträgers mit der zumindest einen Trennfördereinheit und /oder mit der Anpresseinrichtung. Zudem befindet sich der Strömungsdurchgang exakt an derjenigen Stelle, an welcher die zumindest eine Trennfördereinheit aufgrund ihrer Funktion für die Förderwirkung des Fördermediums sorgt.

Bei einer bevorzugten Ausgestaltung des antriebsseitigen Kupplungseinheitenträgers umschließt dieser wenigstens die zumindest eine Trennfördereinheit zumindest teilweise. Aufgrund dieser ineinander verschachtelten Bauweise kann die gesamte Baueinheit aus antriebsseitigem Kupplungseinheitenträger und Trennfördereinrichtung überaus kompakt ausgebildet werden. Dem antriebsseitigen Kupplungseinheitenträger kommt somit die Funktion eines die Trennfördereinrichtung aufnehmenden Gehäuses zu.

Die Erfindung ist anhand eines Ausführungsbeispiels näher erläutert. Es zeigt:
Fig. 1 eine Kopplungsanordnung in Schnittdarstellung, aufweisend eine Kupplungsvorrichtung mit Kupplungseinheiten sowie mit einer Anpresseinrichtung, eine Trennfördereinrichtung mit Trennfördereinheiten, die jeweils über Förderelemente mit asymmetrischen Beschaufelungen und über Trennelementenpaare verfügen, und mit einer Mitnahmeanordnung zwischen einem Kupplungseinheitenträger und der Anpresseinrichtung in Form von Hülsen;
Fig. 2 eine Herauszeichnung einer Trennfördereinheit aus Fig. 1 in Draufsicht mit mehreren Förderelementen pro Trennelementenpaar;
Fig. 3 eine Darstellung der Trennfördereinheit der Fig. 2 gemäß der Schnittlinie A - A in Fig. 2;
Fig. 4 eine Darstellung der Trennfördereinheit der Fig. 2 gemäß der Schnittlinie B - B in Fig. 2;
Fig. 5 eine Darstellung der Trennfördereinheit der Fig. 2 gemäß der Schnittlinie C - C in Fig. 2;
Fig. 6 wie Fig. 2, aber mit lediglich einem Förderelement pro Trennelementenpaar;
Fig. 7 eine Darstellung der Trennfördereinheit der Fig. 6 gemäß der Schnittlinie A - A in Fig. 6;
Fig. 8 eine Darstellung der Trennfördereinheit der Fig. 6 gemäß der Schnittlinie B - B in Fig. 6;
Fig. 9 eine Darstellung der Trennfördereinheit der Fig. 6 gemäß der Schnittlinie C - C in Fig. 6;
Fig. 10 wie Fig. 1, aber mit Trennfördereinheiten, die jeweils über Förderelemente mit symmetrischen Beschaufelungen verfügen;
Fig. 11 wie Fig. 10, also mit Förderelementen mit symmetrischen Beschaufelungen, aber mit Trennfördereinheiten, die jeweils über Förderelemente anderer konstruktiver Ausgestaltung verfügen;
Fig. 12 eine Herauszeichnung einer Trennfördereinheit aus Fig. 11 in Draufsicht mit einem Förderelement pro Trennelementenpaar;
Fig. 13 eine Darstellung der Trennfördereinheit der Fig. 12 gemäß der Schnittlinie A - A in Fig. 12;
Fig. 14 eine Darstellung der Trennfördereinheit der Fig. 12 gemäß der Schnittlinie B - B in Fig. 12;
Fig. 15 wie Fig. 11, aber mit Förderelementen mit asymmetrischen Beschaufelungen;
Fig. 16 eine Herauszeichnung einer Trennfördereinheit aus Fig. 15 in Draufsicht mit mehreren Förderelementen pro Trennelementenpaar;
Fig. 17 eine Darstellung der Trennfördereinheit der Fig. 16 gemäß der Schnittlinie A - A in Fig. 16;
Fig. 18 eine Hülse der Mitnahmeanordnung in Seitenansicht;
Fig. 19 wie Fig. 18, aber in Draufsicht;
Fig. 20 wie Fig. 18, aber mit anderer Ausbildung der Hülse;
Fig. 21 wie Fig. 20, aber in Draufsicht;
Fig. 22 wie Fig. 11, aber mit anderer Ausbildung der Hülsen der Mitnahmeanordnung;
Fig. 23 eine Herauszeichnung eines Kupplungselemententrägers in Schnittdarstellung;
Fig. 24 wie Fig. 23, aber in räumlicher Darstellung;
Fig. 25 eine Draufsicht auf eine Trennfördereinheit mit Förderelementen, die sich radial außen an einem Kupplungselemententräger abstützen;
Fig. 26 wie Fig. 25, aber mit Förderelementen an einer Trennfördereinheit, die sich radial außen an Mitnehmern eines Kupplungselementes abstützen.

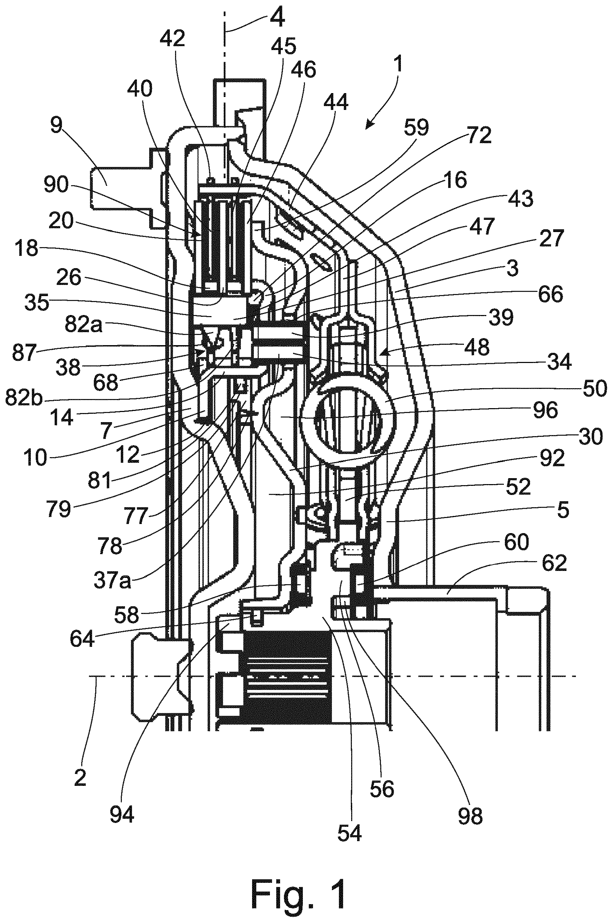

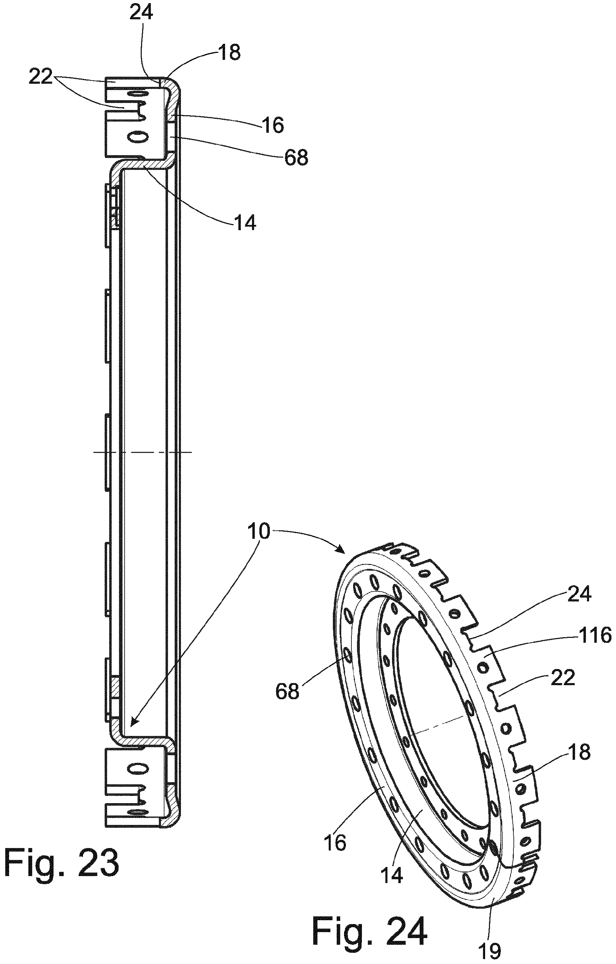

Fig. 1 zeigt eine für den Antriebsstrang eines Fahrzeuges vorgesehene Kopplungsanordnung 1 mit einem um eine Zentralachse 2 drehbaren Kupplungsgehäuse 3, das sich aus einer Gehäuseschale 5 und einem Gehäusedeckel 7 zusammensetzt, und einen ein Fördermedium, wie beispielsweise Öl, enthaltenden Nassraum umschließt. Das Kupplungsgehäuse 3 kann, wie dies beispielsweise in der DE 32 22 119 C1, Fig. 1 gezeigt ist, mittels einer Mitnehmerscheibe an einer Kurbelwelle einer Brennkraftmaschine befestigt sein, und weist hierzu im radial äußeren Bereich des Gehäusedeckels 7 an dessen vom Nassraum abgewandter Seite Gewindezapfen 9 auf. Im Nassraum des Kupplungsgehäuses 3 ist an dessen Gehäusedeckel 7 ein antriebsseitiger Kupplungseinheitenträger 10 an einer Befestigungsstelle 12 befestigt. Der antriebsseitige Kupplungseinheitenträger 10, der als Einzelheit auch in Fig. 23 und 24 dargestellt ist, erstreckt sich radial außerhalb der Befestigungsstelle 12 zunächst mit einem radial inneren Schenkel 14 in Richtung zur Gehäuseschale 5, um in eine Radialverbindung 16 zu einem radial äußeren Schenkel 18 überzugehen, der in Richtung zum Gehäusedeckel 7 verläuft.

Der radial äußere Schenkel 18 des antriebsseitigen Kupplungseinheitenträgers 10 verfügt zur drehgesicherten, aber verschiebbaren Aufnahme von antriebsseitigen Kupplungseinheiten 20 in Umfangsrichtung über eine Mehrzahl von Aussparungen 22 zwischen Stegen 116 (Fig. 23 und 24). Die Aussparungen 22 sind an ihren dem Gehäusedeckel 7 jeweils zugewandten Enden offen, während sie in Richtung zur Gehäuseschale 5 jeweils an einer als Anschlag 24 wirksamen Begrenzung des radial äußeren Schenkels 18 enden. Die bereits genannten antriebsseitigen Kupplungseinheiten 20 greifen mit nach radial innen weisenden Mitnehmern 26 in die Aussparungen 22 des antriebsseitigen Kupplungseinheitenträgers 10 ein, wobei die vom Gehäusedeckel 7 am weitesten entfernte antriebsseitige Kupplungseinheit 20 sich an dem Anschlag 24 axial abstützen kann. An dieser antriebsseitigen Kupplungseinheit 20 kann eine Anpresseinrichtung 30 in Form eines Kupplungskolbens in Anlage gebracht werden.

Axial zwischen je zwei antriebsseitigen Kupplungseinheiten 20 greift je eine abtriebsseitige Kupplungseinheit 40 ein. Die abtriebsseitigen Kupplungseinheiten 40 verfügen jeweils über nach radial außen weisende Mitnehmer 42, mit denen sie in Aussparungen eines abtriebsseitigen Kupplungseinheitenträgers 44 drehgesichert, aber axial verschiebbar eingreifen.

Während die antriebsseitigen Kupplungseinheiten 20 jeweils durch Stahlscheiben gebildet sind, tragen die abtriebsseitigen Kupplungseinheiten 40 auf Reibbelagträgern beidseits Reibbeläge, die mit Nutungen zur Durchströmung mit Fördermedium ausgebildet sein können.

Der abtriebsseitige Kupplungseinheitenträger 44 ist als Eingang 47 eines Torsionsschwingungsdämpfers 48 wirksam, wobei dieser Eingang 47 über eine Energiespeichereinheit 50 mit einem Ausgang 52 des Torsionsschwingungsdämpfers 48 verbunden ist, der drehfest mit einer als Abtrieb 54 dienenden Torsionsschwingungsdämpfernabe 56 ist.

Die Torsionsschwingungsdämpfernabe 56 ist axial zwischen zwei Axiallagerungen 58, 60 aufgenommen, von denen eine Axiallagerung 60 zwischen der Torsionsschwingungsdämpfernabe 56 und einer Gehäusenabe 62 des Kupplungsgehäuses 3 vorgesehen ist, und eine Axiallagerung 58 zwischen der Torsionsschwingungsdämpfernabe 56 und der Anpresseinrichtung 30.

Die Anpresseinrichtung 30 ist an ihrer radialen Innenseite über eine Dichtung 64 auf der Torsionsschwingungsdämpfernabe 56 axial verlagerbar und relativ drehbar angeordnet. Im radial äußeren Bereich ist die Anpresseinrichtung 30 mit einem in Richtung zu den Kupplungseinheiten 20, 40 weisenden Überstand 59 ausgebildet, über welchen die Anpresseinrichtung 30 bei ihrer Einrückbewegung mit der benachbarten antriebsseitigen Kupplungseinheit 20 in Wirkverbindung versetzbar ist.

Radial innerhalb des Überstandes 59 ist der Kupplungskolben 32 der Anpresseinrichtung 30 mit Aussparungen 66 versehen, wobei in jeweils einer dieser Aussparungen 66 je ein Strömungsdurchgang 34 zumindest im Wesentlichen drehfest, aber axial verlagerbar, aufgenommen ist. Dieser jeweilige Strömungsdurchgang 34 durchdringt weiterhin Aussparungen 68 im antriebsseitigen Kupplungseinheitenträger 10, um axial benachbart zu einer Trennfördereinheit 82b zu münden, die gemeinsam mit einer weiteren Trennfördereinheit 82a ein Trennfördereinheitenpaar 87 einer Trennfördereinrichtung 38 bildet, die nachfolgend noch ausführlich kommentiert wird.

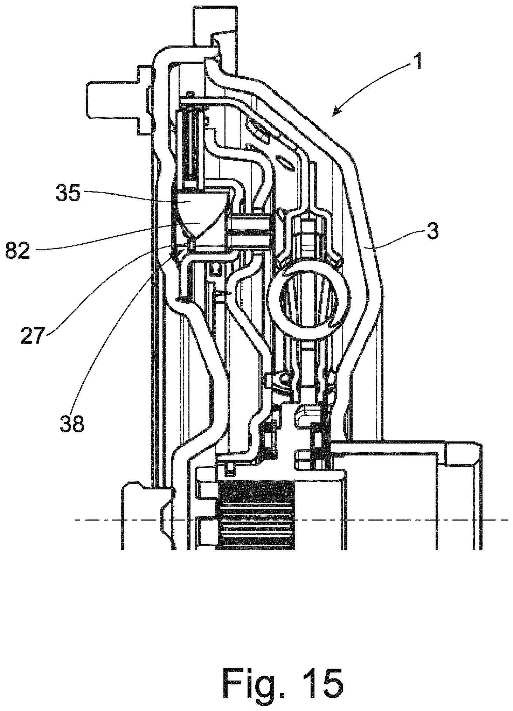

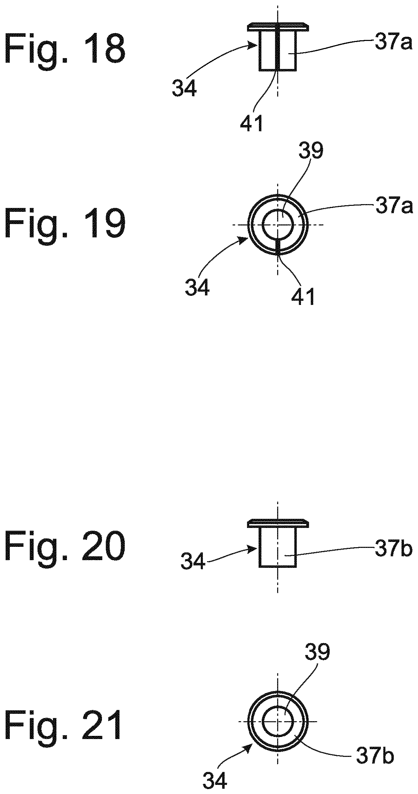

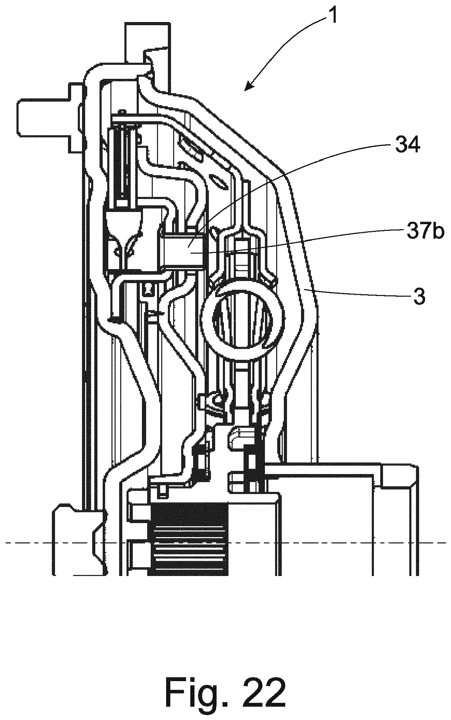

Die Strömungsdurchgänge 34, die in Fig. 18 bis 21 jeweils als Einzelheit herausgezeichnet sind, sind vorzugsweise als Hülsen ausgebildet, und zwar entweder als Spannhülsen 37a (Fig. 1, 10, 11, 15, 18 und 19) oder als am Umfang geschlossene Hülsen 37b (Fig. 20 bis 22). Die jeweilige Spannhülse 37a kann an ihrem Außendurchmesser mit geringfügigem Übermaß gegenüber den die Spannhülse 37a aufnehmenden Aussparungen 66 und/oder 68 ausgebildet sein, und verfügt über einen in Achsrichtung verlaufenden Trennspalt 41. Beim Einbringen der Spannhülse 37a in die Aussparungen 66, 68 von Anpresseinrichtung 30 und antriebsseitigem Kupplungseinheitenträger 10 kann die Spannhülse 37a in Radialrichtung derart elastisch gespannt werden, dass der Außendurchmesser bei gleichzeitigem Aufbrauch des Trennspaltes 41 eine Reduzierung erfährt. Einmal eingelegt in die Aussparungen 66, 68 von Anpresseinrichtung 30 und antriebsseitigem Kupplungseinheitenträger 10 wird sich die Spannhülse 41 unter radialer Entspannung bei gleichzeitig zumindest teilweiser Wiederherstellung des Trennspaltes 41 soweit aufweiten, dass die Spannhülse 37a mit ihrer radialen Außenseite an zumindest einem Innendurchmesser wenigstens einer der Aussparungen 66, 68 von Anpresseinrichtung 30 und antriebsseitigem Kupplungseinheitenträger 10 kraftschlüssig in Anlage gelangt. Findet statt der Spannhülse 37a die am Umfang geschlossene Hülse 37b Anwendung als Strömungsdurchgang 34, dann muss die Hülse 37b nach Durchdringung der Aussparungen 66, 68 von Anpresseinrichtung 30 und antriebsseitigem Kupplungseinheitenträger 10 durch fertigungstechnische Maßnahmen, wie durch Einpressen, am Innendurchmesser wenigstens einer der Aussparungen 66, 68 von Anpresseinrichtung 30 und antriebsseitigem Kupplungseinheitenträger 10 festgelegt werden, mit Vorzug hierbei am Innendurchmesser der Aussparungen 68 des antriebsseitigen Kupplungseinheitenträgers 10. Allen Hülsen 37a oder 37b und damit allen Strömungsdurchgängen 34 gemeinsam ist, dass diese über jeweils einen Durchlass 39 (Fig. 19 und 21) für Fördermedium verfügen.

Wie nachfolgend noch erläutert werden soll, verfügen die Trennfördereinheiten 82a, 82b der Trennfördereinrichtung 38 über eine drehfeste Verbindung gegenüber dem antriebsseitigen Kupplungseinheitenträger 10. Damit stehen die Trennfördereinheiten 82a, 82b wegen der drehfesten Aufnahme der Strömungsdurchgänge 34 in Form der Hülsen 37a oder 37b in den Aussparungen 68 des antriebsseitigen Kupplungseinheitenträgers 10 drehfest mit dem antriebsseitigen Kupplungseinheitenträger 10 und damit drehfest mit der Anpresseinrichtung 30 in Verbindung. Die Strömungsdurchgänge 34 sind daher als Mitnahmeanordnung 70 der Trennfördereinrichtung 38 wirksam. Mit Vorzug sind die Trennfördereinheiten 82a, 82b der Trennfördereinrichtung 38 aus Metall hergestellt, und sind daher entsprechend thermisch belastbar.

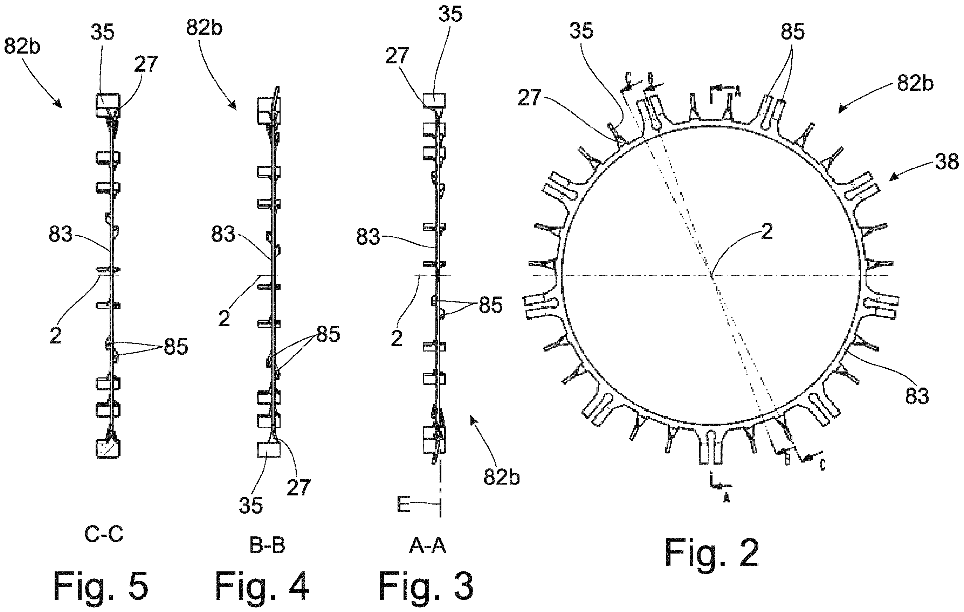

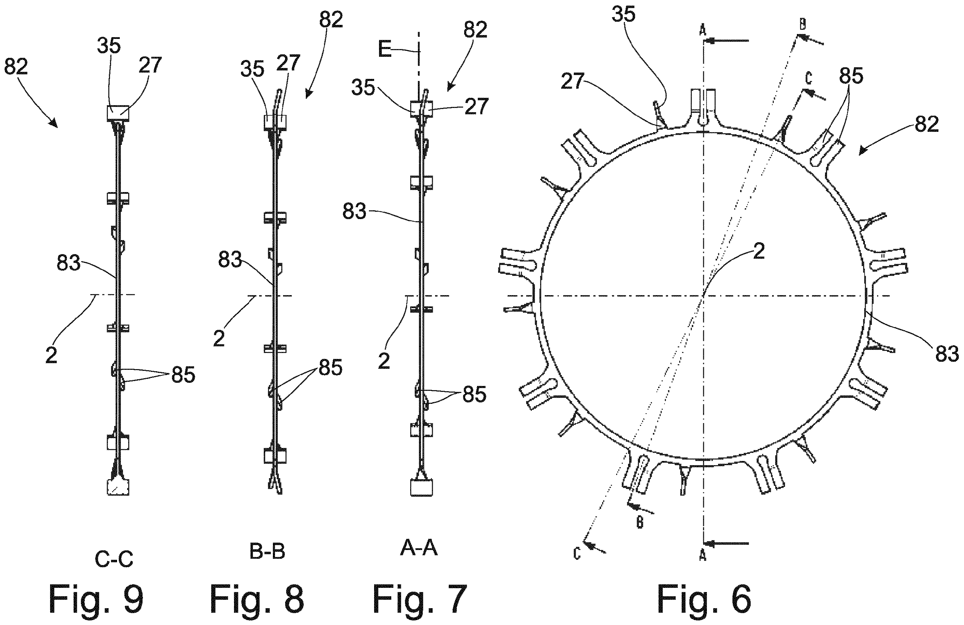

In Fig. 2 ist eine Trennfördereinheit 82b der Trennfördereinrichtung 38 in Draufsicht herausgezeichnet. Die Fig. 3 zeigt die Trennfördereinheit 82b gemäß der Schnittlinie A - A in Fig. 2, die Fig. 4 die Trennfördereinheit 82b gemäß der Schnittlinie B - B in Fig. 2 und die Fig. 5 die Trennfördereinheit 82b gemäß der Schnittlinie C - C in Fig. 2. Wie diese Darstellungen erkennen lassen, weist die Trennfördereinheit 82b jeweils einen die Zentralachse 2 ringförmig umschließenden Trägerteil 83 auf, von welchem nach radial außen ragende, in Umfangsrichtung jeweils paarweise vorgesehene und gegeneinander verschränkte, jeweils ein Trennelementenpaar 88 bildende Trennelemente 85 in Form von Federarmen sowie ebenfalls nach radial außen ragende, in Umfangsrichtung gegenüber einem Trennelementenpaar 88 jeweils mit Versatz angeordnete Förderelemente 27 ausgehen, von denen jedes mit zumindest einer Beschaufelung 35 versehen ist. Die Trennfördereinheiten 82a, 82b können entweder mit nur einem Förderelement 27 pro Trennelementenpaar 88 ausgebildet sein (Fig. 6 bis 9), oder aber die Trennfördereinheit 82 ist mit einer Mehrzahl von Förderelementen 27 pro Trennelementenpaar 88 versehen (Fig. 2 bis 5).

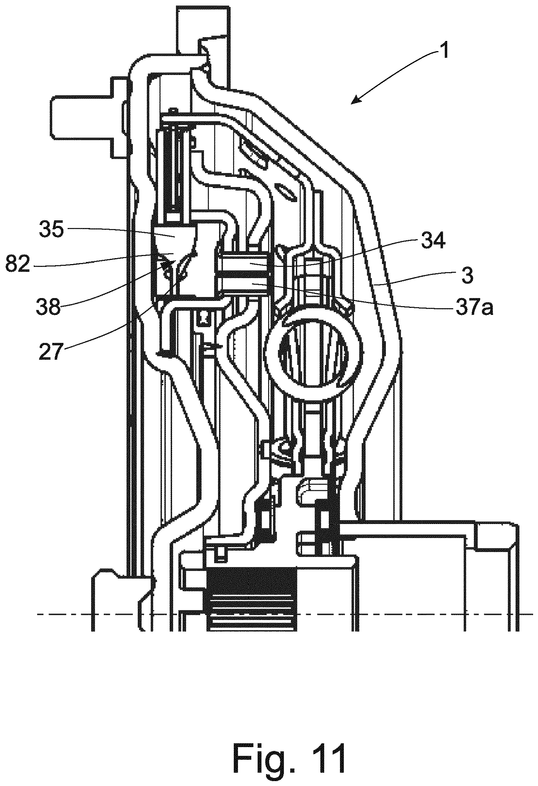

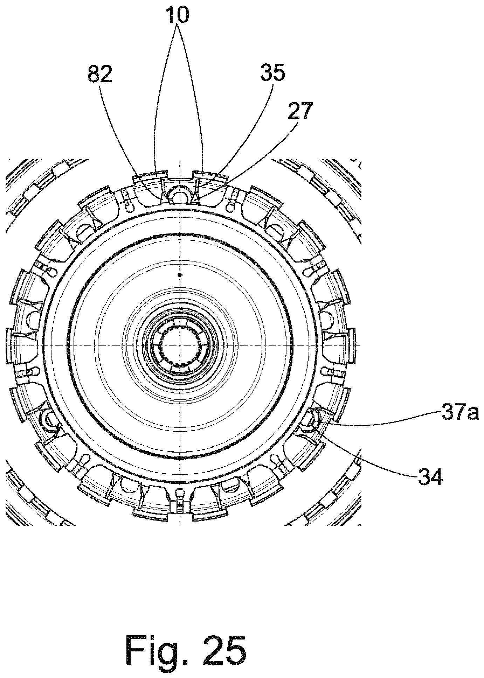

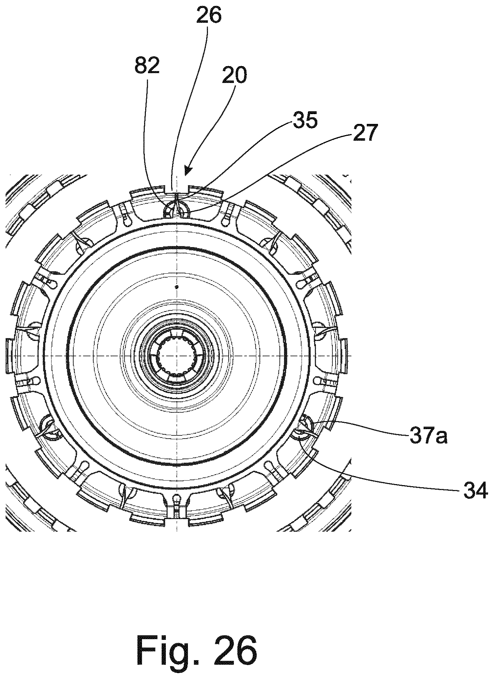

Sofern die Beschaufelung 35 mit ihrer jeweiligen radialen Außenseite in Radialanlage an der radialen Innenseite des antriebsseitigen Kupplungseinheitenträgers 10 oder an der radialen Innenseite der Mitnehmer 26 der antriebsseitigen Kupplungseinheiten 20 steht, erfolgt eine Zentrierung der jeweiligen Trennfördereinheit 82a, 82b (Fig. 1) oder der Trennfördereinheit 82 (Fig. 11) über die Beschaufelung 35 der Förderelemente 27. Die erstgenannte Möglichkeit ist in Fig. 25 gezeigt, bei welcher erkennbar ist, dass die Förderelemente 27 mit der radialen Außenseite ihrer jeweiligen Beschaufelung 35 in Radialanlage an der radialen Innenseite des antriebsseitigen Kupplungseinheitenträgers 10 gelangt. Die andere Möglichkeit ist dagegen der Fig. 26 entnehmbar, bei welcher erkennbar ist, dass die Förderelemente 27 mit der radialen Außenseite ihrer jeweiligen Beschaufelung 35 in Radialanlage an der radialen Innenseite der Mitnehmer 26 der antriebsseitigen Kupplungseinheiten 20 gelangt. Ebenfalls ersichtlich in den Fig. 25 und 26 sind jeweils die als Spannhülsen 37a ausgebildeten Hülsen der Strömungsdurchgänge 34.

Die Beschaufelung 35 kann gemäß Fig. 1 derart an den Förderelementen 27 einer Trennfördereinheit 82a, 82b vorgesehen sein, dass sie in Richtung zur jeweils benachbarten Trennfördereinheit 82a, 82b über eine größere Erstreckungsweite verfügt als in Richtung zu einem anderen benachbarten Bauteil, wie beispielsweise in Fig. 1 dem Gehäusedeckel 7. Die beiden Trennfördereinheiten 82a, 82b eines derart gebildeten Trennfördereinheitenpaares 87 sind demnach richtungsgegensätzlich ausgebildet, indem sie, bezogen auf eine quer zur Zentralachse 2 verlaufende, axial mittig zwischen dem Trennelementenpaar 87 vorgesehene Mittenebene 4, spiegelbildlich zueinander sind. Werden die Trennfördereinheiten 82a, 82b des Trennfördereinheitenpaares 87 zudem mit einem Winkelversatz um die Zentralachse 2 in den antriebsseitigen Kupplungseinheitenträger 10 eingesetzt, greift die Beschaufelung 35 der jeweils einen Trennfördereinheit 82a, 82b jeweils in einen Freiraum 43 der jeweils anderen Trennfördereinheit 82a, 82b ein. Um die Trennfördereinheiten 82a, 82b des Trennfördereinheitenpaares 87 verwechslungssicher montieren zu können, sind die Trennelementenpaare 88 ebenso wie die Förderelemente 27 in einer Umfangsfolge an dem jeweiligen Trägerteil 83 vorgesehen, die ein Einsetzen dieser Trennfördereinheit 82a, 82b ausschließlich in einer bestimmten Position erlaubt. Ein seitenverkehrter Einsatz der Trennfördereinheit 82a, 82b ist damit ebenso unterbunden wie Einsatzfehler bezüglich des Drehwinkels um die Zentralachse. Eine entsprechende Anordnung der Trennelementenpaare 88 und der Förderelemente 27 ist beispielsweise in Fig. 6 zu erkennen, nach welcher einem Trennelementenpaar 88 ebenso wie einem Förderelement 27 jeweils kein vergleichbares Element mit einem 180°-Versatz radial gegenüberliegt, sondern statt dessen jeweils um einen vorbestimmten Winkel in Umfangsrichtung versetzt ist. Da die einzelnen Trennfördereinheiten 82a, 82b des Trennfördereinheitenpaares 87 keine Relativdrehbewegung zueinander ausführen, kommen aufgrund dieser konstruktiven Ausgestaltung der Trennfördereinheiten 82a, 82b deren Beschaufelungen 35 nicht in Kontakt miteinander. Hierdurch lässt sich eine in Achsrichtung große Beschaufelung 35 axial kompakt unterbringen.

Bei der in den Fig. 2 bis 5 herausgezeichneten Trennfördereinheit 82b des in Fig. 1 gezeigten Trennfördereinheitenpaares 87 sind Förderelemente 27 deutlich erkennbar, bei denen die jeweilige Beschaufelung 35 bezogen auf eine in Fig. 3 eingezeichnete Mittenebene E des Trägerteils 83 in einer ersten Richtung eine andere Erstreckungsweite aufweist als in einer hierzu entgegengesetzten zweiten Erstreckungsrichtung.

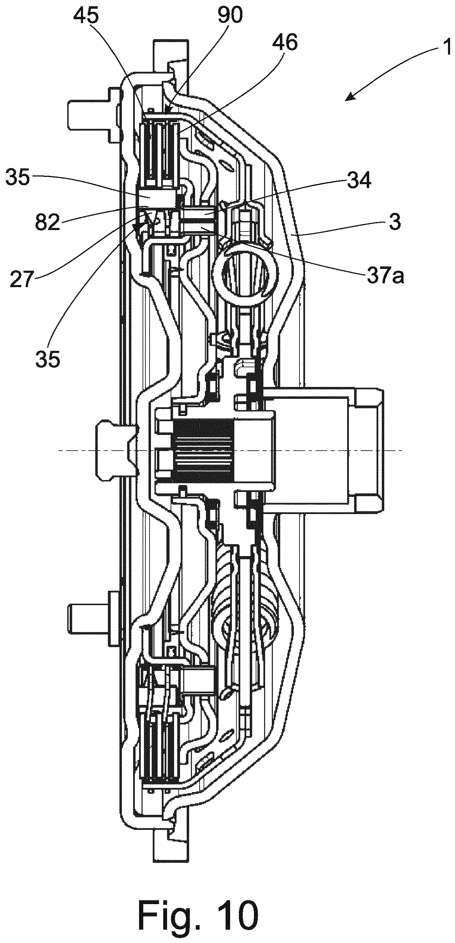

Im Gegensatz dazu zeigen die Fig. 6 bis 9 eine Trennfördereinheit 82 mit Förderelementen 27, bei denen die jeweilige Beschaufelung 35 bezogen auf eine in Fig. 7 eingezeichnete Mittenebene E des Trägerteils 83 in beiden Richtungen über zumindest im Wesentlichen gleiche Erstreckungsweiten verfügt. Eine derart ausgebildete Trennfördereinheit 82 in Einbausituation ist beispielsweise in Fig. 10 oder 11 dargestellt. Von besonderem Vorteil ist eine derartige Ausführung der Beschaufelung 35 der Förderelemente 27 dann, wenn, wie in Fig. 11 gezeigt, lediglich eine einzelne Trennfördereinheit 82 Anwendung findet, oder aber wenn zumindest ein Trennfördereinheitenpaar durch eine einzelne Trennfördereinheit ergänzt werden soll. Auch bei einer solchen Ausführung der Trennfördereinheit 82 gilt, dass diese entweder mit nur einem Förderelement 27 pro Trennelementenpaar 87 ausgebildet sein kann, oder aber mit einer Mehrzahl von Förderelementen 27 pro Trennelementenpaar 87.

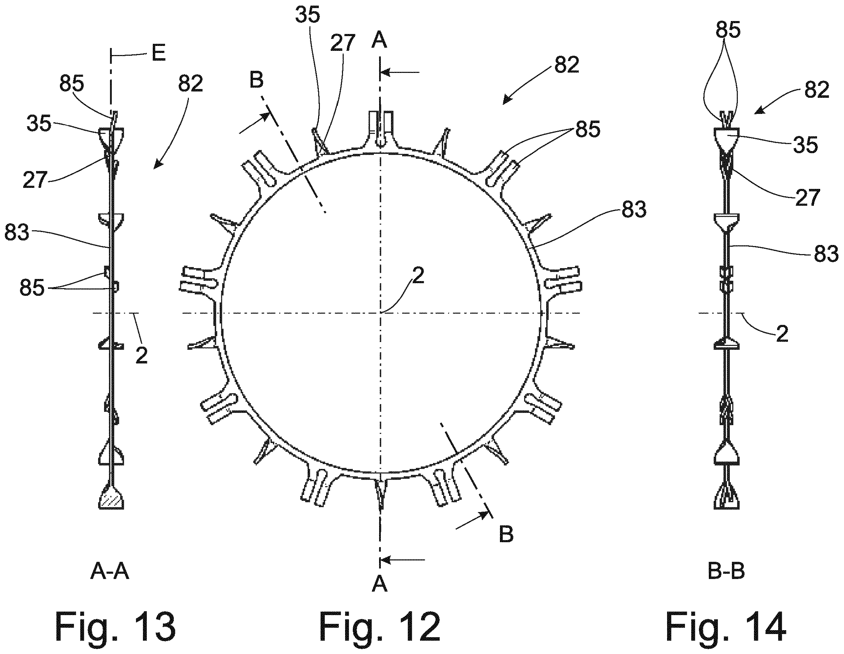

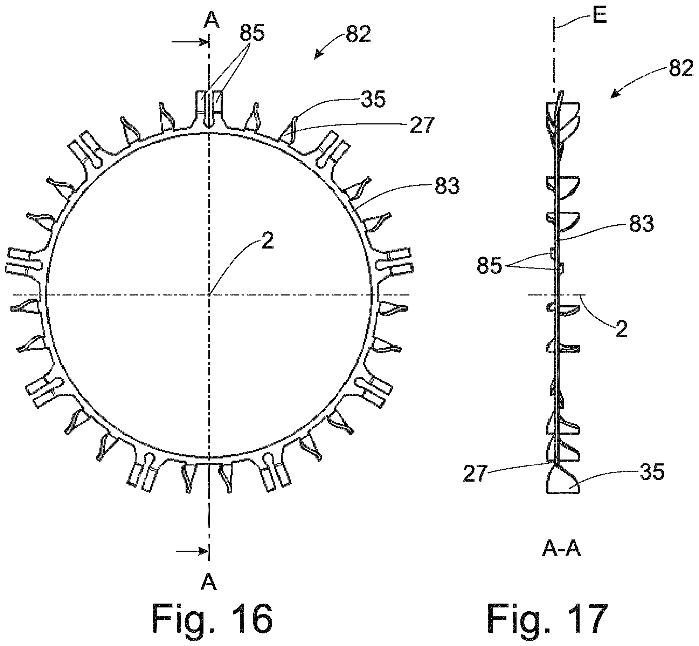

Die Beschaufelung 35 der an Trennfördereinheiten 82a, 82b oder 82 der Trennfördereinrichtung 38 vorgesehenen Förderelemente 27 kann abhängig von den geforderten Strömungsbedingungen im Kupplungsgehäuse 3 zwischen ihrem jeweiligen radial inneren Ende und ihrem radial äußeren Ende entweder zumindest im Wesentlichen über eine rechtwinklige Geometrie verfügen, wie in Fig. 1 bis 10 gezeigt, oder aber über eine hiervon abweichende Geometrie, wie dies in Fig. 11 bis 17 gezeigt ist. Auch bei der letztgenannten Ausführung der Beschaufelung 35 besteht die Möglichkeit, bezogen auf eine in Fig. 13 oder 17 eingezeichnete Mittenebene E des Trägerteils 83 in jeder der beiden einander entgegengesetzten Richtungen eine dieser Richtung zugeordnete Erstreckungsweite vorzugeben. So zeigt Fig. 13 in beiden Richtungen zumindest im Wesentlichen gleiche Erstreckungsweiten, während Fig. 17 in einer ersten Richtung eine Erstreckungsweite erkennen lässt, die sich von der Erstreckungsweite in einer hierzu entgegengesetzten zweiten Richtung deutlich unterscheidet.

Was das Trennelementenpaar 88 betrifft, so ragt bei diesem aufgrund der Verschränkung der einzelnen Trennelemente 85 zueinander jeweils ein Trennelement 85, bezogen auf die axiale Mittenebene E des Trägerteils 83, in Richtung zu einer der beiden jeweils axial benachbarten antriebsseitigen Kupplungseinheiten 20 vor, beispielsweise zu der dem Gehäusedeckel 7 näheren ersten antriebsseitigen Kupplungseinheit 20, während das andere Trennelement 85 in Gegenrichtung hierzu und damit in Richtung zur axial ebenfalls benachbarten anderen antriebsseitigen Kupplungseinheit 20 vorspringt, beispielsweise zu der der Gehäuseschale 5 näheren zweiten antriebsseitigen Kupplungseinheit 20. Die Trennelementenpaare 88 haben demnach die Wirkung, die antriebsseitigen Kupplungseinheiten 20, zwischen welchen sie axial eingreifen, auseinander zu drücken.

Bei dieser Funktion greifen die Trennelemente 85 der jeweiligen Trennfördereinheit 82a, 82b ebenso wie die Mitnehmer 26 der zu den Trennelementen 85 axial benachbarten antriebsseitigen Kupplungseinheiten 20 jeweils in eine der Aussparungen 22 (Fig. 1 in Verbindung mit Fig. 23, 24) im antriebsseitigen Kupplungseinheitenträger 10 ein, und zwar derart, dass sich die Trennelemente 85 und die Mitnehmer 26 radial zumindest ein Stück weit überlappen. Ideal ist hierbei, wenn die Trennelemente 85 der jeweiligen Trennfördereinheit 82a, 82b oder 82, die sich radial innerhalb der antriebsseitigen Kupplungseinheiten 20 befindet, soweit nach radial außen greifen, dass die Trennelemente 85 bis nahezu an den Übergang der Mitnehmer 26 der antriebsseitigen Kupplungseinheiten 20 in den Reibbereich der antriebsseitigen Kupplungseinheiten 20 reichen. In diesem Fall entsteht die größtmögliche Überdeckung zwischen den Trennelementen 85 der Trenneinheiten 82a, 82b oder 82 und dem jeweils zugeordneten Mitnehmer 26 der antriebsseitigen Kupplungseinheiten 20.

Wie Fig. 1 deutlich erkennen lässt, ist der antriebsseitige Kupplungseinheitenträger 10 aufgrund der bereits beschriebenen Anordnung von radial innerem Schenkel 14, Radialverbindung 16 und radial äußerem Schenkel 18 im Querschnitt zumindest im Wesentlichen u-förmig, und begrenzt hierdurch gemeinsam mit dem Gehäusedeckel 7 einen Raum 72, welcher zur Aufnahme der Trennfördereinrichtung 38 dient. Die Funktion dieser Trennfördereinrichtung 38 ist wie folgt:
An dem Kupplungskolben 32 der Anpresseinrichtung 30 ist an der dem Gehäusedeckel 7 zugewandten Seite eine Dichtungsaufnahme 77 befestigt, beispielsweise mittels einer Verschweißung 78, wie in Fig. 1 gezeigt. Die Dichtungsaufnahme 77 nimmt in einer u-förmig begrenzten Ausnehmung 79 eine Dichtung 81 auf, die an der von der Trennfördereinrichtung 38 abgewandten Seite des radial inneren Schenkels 14 des antriebsseitigen Kupplungseinheitenträgers 10 in Anlage gelangt. Die Dichtungsaufnahme 77 ist ebenso wie die Dichtung 81 zwischen dem antriebsseitigen Kupplungseinheitenträger 10 und der Anpresseinrichtung 30 wirksam.

Die Kupplungseinheiten 20 und 40 sind ebenso wie die Kupplungseinheitenträger 10 und 44, die Anpresseinrichtung 30 und gegebenenfalls die Trennfördereinheiten 82a, 82b oder 82 Teil einer Kupplungsvorrichtung 90. Darüber hinaus sind die antriebsseitigen Kupplungseinheiten 20 Teil einer antriebsseitigen Kupplungseinheitengruppe 45, und die abtriebsseitigen Kupplungseinheiten 40 Teil einer abtriebsseitigen Kupplungseinheitengruppe 46.

Axial zwischen dem Gehäusedeckel 7 und der Anpresseinrichtung 30 ist ein Druckraum 92 vorgesehen, dessen Versorgung mit Fördermedium vom Bereich der Zentralachse 2 aus über einen Druckanschluss erfolgt, dem ein Durchgang 94 zugeordnet ist, der in der Torsionsschwingungsdämpfernabe 56 benachbart zum Gehäusedeckel 7 vorgesehen ist. Jenseits der Anpresseinrichtung 30 befindet sich ein Kühlraum 96, der unter anderem die Kupplungseinheiten 20 und 40, die Kupplungseinheitenträger 10 und 44, die Trennfördereinrichtung 38 sowie den Torsionsschwingungsdämpfer 48 zumindest teilweise umschließt. Die Versorgung des Kühlraumes 96 mit Fördermedium erfolgt über einen Druckanschluss, dem ein Durchgang 98 zugeordnet ist, der in der Torsionsschwingungsdämpfernabe 56 benachbart zur Gehäusenabe 62 vorgesehen ist. Zur Gewährleistung eines eingestellten Druckgefälles zwischen dem Druckraum 92 und dem Kühlraum 94 ist die Dichtung 81 vorgesehen.

Zum Einrücken der Kupplungsvorrichtung 90 wird ein Überdruck im Kühlraum 96 eingestellt, indem durch den Druckanschluss, welcher dem zur Gehäusenabe 62 benachbarten Durchgang 98 zugeordnet und nachfolgend als erster Druckanschluss bezeichnet ist, Fördermedium in den Kühlraum 96 eingeleitet wird. Gleichzeitig wird über denjenigen Druckanschluss, der dem zum Gehäusedeckel 7 benachbarten Durchgang 94 zugeordnet und nachfolgend als zweiter Druckanschluss bezeichnet ist, Fördermedium aus dem Druckraum 92 abgelassen. Ungeachtet hiervon kann ein definierter Strom an Fördermedium über einen in der Anpresseinrichtung 30 vorgesehenen Durchgang 97 aus dem Kühlraum 96 in den Druckraum 92 gelangen. Bei dieser Durchströmungsrichtung wird der Kupplungskolben 32 der Anpresseinrichtung 30 in Richtung zu den Kupplungseinheiten 20 und 40 verlagert, um zunächst mit der zum Anpresselement 30 benachbarten antriebsseitigen Kupplungseinheit 20 in Anlage zu gelangen, und anschließend eine Axialkraft einzuleiten, durch welche die Kupplungseinheiten 20 und 40 gegen die Wirkung der axial zwischen die Kupplungseinheiten 20 eingreifenden, gegeneinander verschränkten Trennelemente 85 der jeweiligen Trennfördereinheit 82a, 82b oder 82 in Wirkverbindung miteinander gebracht werden. Bei dieser Bewegung der Anpresseinrichtung 30 werden die Strömungsdurchgänge 34 der Mitnahmeanordnung 70 der Trennfördereinrichtung 38 axial relativ gegenüber den diese Strömungsdurchgänge 34 aufnehmenden Aussparungen 66 der Anpresseinrichtung 30 verlagert, und auch die Dichtung 81 erfährt eine Axialverlagerung gegenüber dem antriebsseitigen Kupplungseinheitenträger 10.

Zum Ausrücken der Kupplungsvorrichtung 90 wird ein Überdruck im Druckraum 92 eingestellt, indem durch den zweiten Druckanschluss, welcher dem zum Gehäusedeckel 7 benachbarten Durchgang 94 zugeordnet ist, Fördermedium in den Druckraum 92 eingeleitet wird. Gleichzeitig wird über den ersten Druckanschluss, der dem zur Gehäusenabe 62 benachbarten Durchgang 98 zugeordnet ist, Fördermedium aus dem Kühlraum 96 abgelassen. Ungeachtet hiervon kann ein definierter Strom an Fördermedium über den in der Anpresseinrichtung 30 vorgesehenen Durchgang 97 aus dem Druckraum 92 in den Kühlraum 96 gelangen. Bei dieser Durchströmungsrichtung wird der Kupplungskolben 32 der Anpresseinrichtung 30 in von den Kupplungseinheiten 20 und 40 fort weisender Richtung verlagert, um zunächst mit Unterstützung der axial zwischen die Kupplungseinheiten 20 eingreifenden, gegeneinander verschränkten Trennelemente 85 der jeweiligen Trennfördereinheit 82a, 82b oder 82 die auf die Kupplungseinheiten 20 und 40 eingeleitete Axialkraft zu reduzieren, und schließlich von der zum Anpresselement 30 benachbarten antriebsseitigen Kupplungseinheit 20 abzuheben. Auch bei dieser Bewegung der Anpresseinrichtung 30 werden die Strömungsdurchgänge 34 der Mitnahmeanordnung 70 der Trennfördereinrichtung 38 axial relativ gegenüber den diese Strömungsdurchgänge 34 aufnehmenden Aussparungen 66 der Anpresseinrichtung 30 verlagert, ebenso wie auch die Dichtung 81 eine Axialverlagerung gegenüber dem antriebsseitigen Kupplungseinheitenträger 10 erfährt.

Wie bereits erwähnt, sind die Strömungsdurchgänge 34 in den Aussparungen 68 des antriebsseitigen Kupplungseinheitenträgers 10 drehfest aufgenommen, und sind damit auch drehfest mit den Trennfördereinheiten 82a, 82b oder 82 der Trennfördereinrichtung 38 verbunden. Da der antriebsseitige Kupplungseinheitenträger 10 wiederum drehfest am Gehäusedeckel 7 und damit am Kupplungsgehäuse 3 aufgenommen ist, werden die Trennfördereinheiten 82a, 82b oder 82 der Trennfördereinrichtung 38 der Bewegung des Kupplungsgehäuses 3 nachgeführt, also mit Antriebsdrehzahl. In demjenigen Bereich, in welchem die Strömungsdurchgänge 34 in den Aussparungen 66 der Anpresseinrichtung 30 münden, rotieren dagegen die abtriebsseitigen Kupplungseinheiten 40 zusammen mit dem abtriebsseitigen Kupplungseinheitenträger 44 und dem Torsionsschwingungsdämpfer 48, also mit einer unterhalb der Antriebsdrehzahl liegenden Drehzahl, an der Torsionsschwingungsdämpfernabe 56 sogar mit der Drehzahl des Abtriebs 54. Da, solange die Kupplungsvorrichtung 90 noch nicht vollständig eingerückt ist, bei dem überwiegend anliegenden Zugbetrieb die Drehzahl am Kupplungsgehäuse 3 höher liegt als an der Torsionsschwingungsdämpfernabe 56, saugt die Fördereinrichtung 38 Fördermedium über die Strömungsdurchgänge 34 aus dem Kühlraum 96 an. Gleichzeitig verdrängt die Fördereinrichtung 38 Fördermedium nach radial außen in den Erstreckungsbereich der Kupplungseinheiten 20 und 40, wo eine Kühlung in deren Kontaktbereichen erfolgt. Dieses Fördermedium gelangt von den Kupplungseinheiten 20 und 40 aus zumindest im Wesentlichen wieder zurück in denjenigen Bereich des Kühlraums 96, in welchem es über die Strömungsdurchgänge 34 erneut angesaugt werden kann.

Der mittels der Trennfördereinrichtung 38 ausgelöste interne Strömungskreis ist, da die Förderleistung der Trennfördereinrichtung 38 mit der Drehzahl im Quadrat ansteigt, bei stehendem Fahrzeug und Leerlaufdrehzahl auf ein geringes Leerlaufmoment ausgelegt. Bei steigender Drehzahl am Kupplungsgehäuse 3 und damit verbundener erhöhter Anfahr-Verlustleistung an den Kupplungseinheiten 20 und 40 erhöht sich die Förderleistung des Fördermediums vorteilhaft gemäß einer vorgegebenen Kennlinie für die Trennfördereinrichtung 38.

Selbstverständlich kann dem mittels der Trennfördereinrichtung 38 ausgelösten internen Strömungskreis frisches Fördermedium von einer externen Förderquelle zugeführt werden, um auch unter Reibbelastung dauerhaft eine effiziente Kühlung aufrechterhalten zu können.

Der mittels der Trennfördereinrichtung 38 ausgelöste interne Strömungskreis wird enden, sobald die Kupplungsvorrichtung 90 komplett eingerückt ist, und die Drehzahlen am Abtrieb 54 sich zumindest im Wesentlichen an die Drehzahlen am Kupplungsgehäuse 3 angeglichen haben.

### Bezugszeichen

- 1: Kopplungsanordnung
- 2: Zentralachse
- 3: Kupplungsgehäuse
- 4: Mittenebene
- 5: Gehäuseschale
- 7: Gehäusedeckel
- 9: Gewindezapfen
- 10: antriebsseitiger Kupplungseinheitenträger
- 12: Befestigungsstelle
- 14: radial innerer Schenkel
- 16: Radialverbindung
- 18: radial äußerer Schenkel
- 20: antriebsseitige Kupplungseinheiten
- 22: Aussparungen
- 24: Anschlag
- 26: Mitnehmer
- 27: Förderelement
- 30: Anpresseinrichtung
- 34: Strömungsdurchgang
- 35: Beschaufelung
- 37: Hülse
- 38: Trennfördereinrichtung
- 39: Durchlass
- 40: abtriebsseitige Kupplungseinheit
- 41: Trennspalt
- 42: Mitnehmer
- 43: Freiraum
- 44: abtriebsseitiger Kupplungseinheitenträger
- 45: antriebsseitige Kupplungseinheitengruppe
- 46: abtriebsseitige Kupplungseinheitengruppe
- 47: Eingang
- 48: Torsionsschwingungsdämpfer
- 50: Energiespeichereinheit
- 52: Ausgang
- 54: Abtrieb
- 56: Torsionsschwingungsdämpfernabe
- 58: Axiallagerung
- 59: Überstand an der Anpresseinrichtung
- 60: Axiallagerung
- 62: Gehäusenabe
- 64: Dichtung
- 66: Aussparung in der Anpresseinrichtung
- 68: Aussparung im antriebsseitigen Kupplungseinheitenträger
- 70: Mitnahmeanordnung
- 72: Raum
- 77: Dichtungsaufnahme
- 78: Verschweißung
- 79: Ausnehmung
- 81: Dichtung
- 82: Trennfördereinheit
- 83: Trägerteil
- 85: Trennelement
- 87: Trennfördereinheitenpaar
- 88: Trennelementenpaar
- 90: Kupplungsvorrichtung
- 92: Druckraum
- 94: Durchgang
- 96: Kühlraum
- 97: Durchgang
- 98: Durchgang
- 116: Stege

## Patentansprüche

1. Kopplungsanordnung (1) für den Antriebsstrang eines Fahrzeuges mit einem Kupplungsgehäuse (3), versehen mit einer Kupplungsvorrichtung (90), die antriebsseitige Kupplungseinheiten (20), die mit einem gegenüber dem Kupplungsgehäuse (3) drehfesten antriebsseitigen Kupplungseinheitenträger (10) in Wirkverbindung stehen, abtriebsseitige Kupplungseinheiten (40), die über einen abtriebsseitigen Kupplungseinheitenträger (44) mit einem Abtrieb (54) in Wirkverbindung stehen, sowie eine Anpresseinrichtung (30), durch welche eine Wirkverbindung zwischen den antriebsseitigen Kupplungseinheiten (20) und den abtriebsseitigen Kupplungseinheiten (40) herstellbar oder aufhebbar ist, aufweist, wobei der Kupplungsvorrichtung (90) Trennelemente (85) für Kupplungseinheiten (20) zugeordnet sind, die auf jeweils zueinander benachbarte Kupplungseinheiten (20) der jeweils gleichen Kupplungseinheitengruppe (45) einwirken, um die Kupplungseinheiten (20) dieser Kupplungseinheitengruppe (45) mit Axialkräften in voneinander fortweisender Richtung zu beaufschlagen, wobei die Kupplungsvorrichtung (90) weiterhin mit wenigstens einem im Kupplungsgehäuse (3) gegenüber demselben zumindest im Wesentlichen drehfest positionierten Förderelement (27) für im Kupplungsgehäuse (3) enthaltenes Fördermedium versehen ist, wobei das wenigstens eine Förderelement (27) zusammen mit den Trennelementen (85) für Kupplungseinheiten (20) zumindest eine Trennfördereinheit (82a, 82b; 82) einer Trennfördereinrichtung (38) bildet, und **dadurch gekennzeichnet**, die wenigstens eine Trennfördereinheit (82a, 82b; 82) zur Bildung des wenigstens einen Förderelementes (27) mit zumindest einer Beschaufelung (35) versehen ist..

2. Kopplungsanordnung (1) nach Anspruch 1, **dadurch gekennzeichnet, dass** bei der Trennfördereinrichtung (38) die Trennelemente (85) der zumindest einen Trenneinheit (82a, 82b; 82) axial zwischen die entsprechenden Kupplungseinheiten (20) eingreifen.

3. Kopplungsanordnung (1) nach Anspruch 1 oder 2 mit einer Kupplungseinheitengruppe (45), bei welcher die Kupplungseinheiten (20) durch die wenigstens eine Trennfördereinheit (82a, 82b; 82) mit Axialkräften in voneinander fortweisender Richtung beaufschlagt werden, und der ein Kupplungseinheitenträger (10) zugeordnet ist, der zumindest eine Aussparung (22) zum drehfesten Eingriff wenigstens eines an der entsprechenden Kupplungseinheit (20) vorgesehenen Mitnehmers (26) aufweist, **dadurch gekennzeichnet, dass** die wenigstens eine Trennfördereinheit (82a, 82b; 82) mit den Trennelementen (85) axial zwischen die Mitnehmer (26) der entsprechenden Kupplungseinheiten (20) in die Aussparung (22) des Kupplungseinheitenträgers (10) zumindest eingreift.

4. Kopplungsanordnung (1) nach Anspruch 1 mit wenigstens einer Trennfördereinheit (82a, 82b; 82) der Trennfördereinrichtung (38), die über eine Mehrzahl von Trennelementen (85) verfugt, **dadurch gekennzeichnet, dass** die wenigstens eine Trennfördereinheit (82a, 82b; 82) der Trennfördereinrichtung (38) zumindest einen Trägerteil (83) aufweist, an welchem zusätzlich zu der Mehrzahl an Trennelementen (85) auch eine Mehrzahl von Förderelementen (27) aufgenommen ist, wobei die Trennelemente (85) ebenso wie die Förderelemente (27) an einem ersten Umfangsabschnitt mit Umfangsabstanden gegenüber den jeweils benachbarten Trennelementen (85) und/oder Förderelementen (27) vorgesehen sind, die sich von den Umfangsabstanden der Trennelemente (85) Oder der Förderelemente (27) an wenigstens einem weiteren Umfangsabschnitt des Trägerteils (83) unterscheiden.

5. Kopplungsanordnung (1) nach Anspruch 1, **dadurch gekennzeichnet, dass** die Trennfördereinrichtung (38) mit zumindest einem Trennfördereinheitenpaar (87) versehen ist, wobei die einzelnen Trennfördereinheiten (82a, 82b) des jeweiligen Trennfördereinheitenpaares (87) bezogen auf eine quer zu einer Zentralachse (2) verlaufende, axial mittig zwischen dem Trennfördereinheitenpaar (87) verlaufende Mittenebene (4) spiegelbildlich zueinander sind.

6. Kopplungsanordnung (1) nach Anspruch 1, **dadurch gekennzeichnet, dass** sich die zumindest eine Beschaufelung (35) in Bezug auf eine axiale Mittenebene (E) des Trägerteils (83) der wenigstens einen Trennfördereinheit (82a, 82b; 82) in einer ersten Achsrichtung zumindest im Wesentlichen ebenso weit erstreckt wie in einer hierzu entgegengesetzten zweiten Achsrichtung.

7. Kopplungsanordnung (1) nach Anspruch 1, **dadurch gekennzeichnet, dass** sich die zumindest eine Beschaufelung (35) in Bezug auf eine axiale Mittenebene (E) des Trägerteils (83) der wenigstens einen Trennfördereinheit (82a, 82b; 82) in einer ersten Achsrichtung zumindest im Wesentlichen weiter erstreckt als in einer hierzu entgegengesetzten zweiten Achsrichtung.

8. Kopplungsanordnung (1) nach Anspruch 1, **dadurch gekennzeichnet, dass** die wenigstens eine Trennfördereinheit (82a, 82b;82) der Trennfördereinrichtung (38) die Beschaufelung (35) des zumindest einen Förderelementes (28) durch Radialanlage der Beschaufelung (35) an dem antriebsseitigen Kupplungseinheitenträger (10) oder an zumindest einer antriebsseitigen Kupplungseinheit (20) zur Zentrierung der wenigstens einen Trennfördereinheit (82a, 82b;82) bezüglich des Kupplungsgehäuses (3) nutzt.

9. Kopplungsanordnung (1) nach Anspruch 1, **dadurch gekennzeichnet, dass** die wenigstens eine Trennfördereinheit (82a, 82b; 82) der Trennfördereinrichtung (38) jeweils mit zumindest einem Trennelementenpaar (88) mit gegeneinander verschränkten Trennelementen (85) versehen ist, so dass wenigstens jeweils ein Trennelement (85) bezogen auf die axiale Mittenebene (E) des Trägerteils (83) der wenigstens einen Trennfördereinheit (82a, 82b; 82) in Richtung zu einer der beiden benachbarten Baueinheiten (20) und wenigstens jeweils ein anderes Trennelement (85) bezogen auf die axiale Mittenebene (E) des Trägerteils (83) der wenigstens einen Trennfördereinheit (82a, 82b; 82) in Richtung zur anderen der beiden benachbarten Baueinheiten (20) vorspringt.

10. Kopplungsanordnung (1) nach Anspruch 1, **dadurch gekennzeichnet, dass** den Förderelementen (27) zur Herstellung einer drehfesten Verbindung mit dem antriebsseitigen Kupplungseinheitenträger (10) und/oder mit der Anpresseinrichtung (30) eine Mitnahmeanordnung (70) mit wenigstens einem Strömungsdurchgang (34) zugeordnet ist, der einerseits in eine entsprechende Aussparung (68) des antriebsseitigen Kupplungseinheitenträgers (10) und andererseits in eine entsprechende Aussparung (66) der Anpresseinrichtung (30) eingreift.

11. Kopplungsanordnung (1) nach Anspruch 1, **dadurch gekennzeichnet, dass** der antriebsseitige Kupplungseinheitenträger (10) die wenigstens eine Trennfördereinheit (82a, 82b; 82) der Trennfördereinrichtung (38) zumindest teilweise umschließt.

12. Kopplungsanordnung (1) nach Anspruch 1, **dadurch gekennzeichnet, dass** die wenigstens eine Trennfördereinheit (82a, 82b; 82) der Trennfördereinrichtung (38) radial innerhalb der Kupplungseinheiten (20, 40) der Kupplungsvorrichtung (90) angeordnet ist.

13. Kopplungsanordnung (1) nach Anspruch 4, **dadurch gekennzeichnet, dass** der Trägerteil (83) der wenigstens einen Trennfördereinheit (82a, 82b; 82) der Trennfördereinrichtung (38) eine Zentralachse (2) des Kupplungsgehäuses (3) ringförmig umschließt.

## Claims

1. Coupling assembly (1) for the drive train of a vehicle, having a clutch housing (3), provided with a clutch device (90) that has:
drive-proximal clutch units (20) which are operatively connected to a drive-proximal clutch unit carrier (10) which is rotationally fixed in relation to the clutch housing (3);
output-proximal clutch units (40) which, by way of an output-proximal clutch unit carrier (44), are operatively connected to an output (54);
as well as a contact pressure installation (30) by way of which an operative connection between the drive-proximal clutch units (20) and the output-proximal clutch units (40) is able to be established or cancelled;
wherein the clutch device (90) is assigned separating elements (85) for clutch units (20), said separating elements (85) acting on respectively mutually adjacent clutch units (20) of the respective same clutch unit group (45) so as to impinge the clutch units (20) of this clutch unit group (45) with axial forces in diverging directions;
wherein the clutch device (90) is furthermore provided with at least one conveying element (27) for conveying medium contained in the clutch housing (3), said conveying element (27) in the clutch housing (3) being positioned so as to be substantially rotationally fixed in relation to said clutch housing (3);
wherein the at least one conveying element (27) conjointly with the separating elements (85) for coupling units (20) forms at least one separating conveyor unit (82a, 82b; 82) of a separating conveyor installation (38), and
**characterized in that** the at least one separating conveyor unit (82a, 82b; 82) for forming the at least one conveying element (27) is provided with at least one blade row (35).

2. Coupling assembly (1) according to Claim 1, **characterized in that**, in the separating conveyor installation (38), the separating elements (85) of the at least one separation unit (82a, 82b; 82) engage axially between the corresponding clutch units (20).

3. Coupling assembly (1) according to Claim 1 or 2, having a clutch unit group (45) in which the clutch units (20), by the at least one separating conveyor unit (82a, 82b; 82), are impinged with axial forces in diverging directions; and
which clutch unit group (45) is assigned a clutch unit carrier (10) which has at least one recess (22) for the rotationally fixed engagement of at least one entrainment element (26) provided on the corresponding clutch unit (20),
**characterized in that** the at least one separating conveyor unit (82a, 82b; 82), by way of the separating elements (85), axially between the entrainment elements (26) of the corresponding clutch units (20), at least engages into the recess (22) of the clutch unit carrier (10).

4. Coupling assembly (1) according to Claim 1, having at least one separating conveyor unit (82a, 82b; 82) of the separating conveyor installation (38), said separating conveyor unit (82a, 82b; 82) possessing a plurality of separating elements (85), **characterized in that** the at least one separating conveyor unit (82a, 82b; 82) of the separating conveyor installation (38) has at least one carrier part (83) on which, in addition to the plurality of separating elements (85), a plurality of conveying elements (27) are also received, wherein the separating elements (85), like the conveying elements (27), are provided on a first circumferential portion at a circumferential spacings from the respectively adjacent separating elements (85) and/or conveying elements (27), said circumferential spacings differing from the circumferential spacings of the separating elements (85) or of the conveying elements (27) on at least one further circumferential portion of the carrier part (83).

5. Coupling assembly (1) according to Claim 1, **characterized in that** the separating conveyor installation (38) is provided with at least one separating conveyor unit pair (87), wherein the individual separating conveyor units (82a, 82b) of the respective separating conveyor unit pair (87) are mutually mirror-symmetrical in terms of a central plane (4) that runs transversely to a central axis (2) and runs so as to be axially centric between the separating conveyor unit pair (87).

6. Coupling assembly (1) according to Claim 1, **characterized in that** the at least one blade row (35), in terms of an axial central plane (E) of the carrier part (83) of the at least one separating conveyor unit (82a, 82b; 82), in a first axial direction extends at least substantially as far as in a second axial direction opposed to the former.

7. Coupling assembly (1) according to Claim 1, **characterized in that** the at least one blade row (35), in terms of an axial central plane (E) of the carrier part (83) of the at least one separating conveyor unit (82a, 82b; 82), in a first axial direction extends at least substantially further than in a second axial direction opposed to the former.

8. Coupling assembly (1) according to Claim 1, **characterized in that** the at least one separating conveyor unit (82a, 82b; 82) of the separating conveyor installation (38) utilizes the blade row (35) of the at least one conveying element (28) by way of the blade row (35), for centring the at least one separating conveyor unit (82a, 82b; 82) in terms of the clutch housing (3), bearing radially on the drive-proximal clutch unit carrier (10) or on at least one drive-proximal clutch unit (20).

9. Coupling assembly (1) according to Claim 1, **characterized in that** the at least one separating conveyor unit (82a, 82; 82) of the separating conveyor installation (38) is in each case provided with at least one separating element pair (88) having mutually crossed separating elements (85) so that at least one separating element (85), in terms of the axial central plane (E) of the carrier part (83) of the at least one separating conveyor unit (82a, 82b; 82), projects in each case in the direction towards one of the two adjacent modules (20), and at least one other separating element (85), in terms of the axial central plane (E) of the carrier part (83) of the at least one separating conveyor unit (82a, 82b; 82), projects in each case in the direction towards the other of the two adjacent modules (20).

10. Coupling assembly (1) according to Claim 1, **characterized in that** the conveying elements (27) for establishing a rotationally fixed connection to the drive-proximal clutch unit carrier (10) and/or to the contact pressure installation (30) are assigned an entrainment assembly (70) having at least one flow passage (34) which engages in a corresponding recess (68) of the drive-proximal clutch unit carrier (10), on the one hand, and in a corresponding recess (66) of the contact pressure installation (30), on the other hand.

11. Coupling assembly (1) according to Claim 1, **characterized in that** the drive-proximal clutch unit carrier (10) at least partially encloses the at least one separating conveyor unit (82a, 82b; 82) of the separating conveyor installation (38).

12. Coupling assembly (1) according to Claim 1, **characterized in that** the at least one separating conveyor unit (82a, 82b; 82) of the separating conveyor installation (38) is disposed so as to be radially within the clutch units (20, 40) of the clutch device (90).

13. Coupling assembly (1) according to Claim 4, **characterized in that** the carrier part (83) of the at least one separating conveyor unit (82a, 82b; 82) of the separating conveyor installation (38) encloses in an annular manner a central axis (2) of the clutch housing (3).

## Revendications

1. Agencement d'accouplement (1) pour la chaîne cinématique d'un véhicule, comprenant un boîtier d'embrayage (3), muni d'un dispositif d'embrayage (90), qui comprend des unités d'embrayage côté entraînement (20), qui sont en liaison active avec un support d'unités d'embrayage côté entraînement (10) de manière immobile en rotation par rapport au boîtier d'embrayage (3), des unités d'embrayage côté sortie (40), qui sont en liaison active avec une sortie (54) par l'intermédiaire d'un support d'unités d'embrayage côté sortie (44), ainsi qu'un appareil de pression (30), par lequel une liaison active entre les unités d'embrayage côté entraînement (20) et les unités d'embrayage côté sortie (40) peut être établie ou supprimée, des éléments de séparation (85) pour des unités d'embrayage (20) étant associés au dispositif d'embrayage (90), qui agissent sur des unités d'embrayage (20) respectivement voisines les unes des autres du même groupe d'unités d'embrayage respectif (45), afin de solliciter les unités d'embrayage (20) de ce groupe d'unités d'embrayage (45) avec des forces axiales en direction opposée les unes des autres, le dispositif d'embrayage (90) étant en outre muni d'au moins un élément de transport (27) pour un milieu de transport contenu dans le boîtier d'embrayage (3), positionné dans le boîtier d'embrayage au moins essentiellement de manière immobile en rotation par rapport à celui-ci, l'au moins un élément de transport (27) formant conjointement avec les éléments de séparation (85) pour des unités d'embrayage (20) au moins une unité de transport et de séparation (82a, 82b ; 82) d'un appareil de transport et de séparation (38), et **caractérisé en ce que** l'au moins une unité de transport et de séparation (82a, 82b ; 82) est munie d'au moins un aubage (35) pour la formation de l'au moins un élément de transport (27).

2. Agencement d'accouplement (1) selon la revendication 1, **caractérisé en ce que**, dans l'appareil de transport et de séparation (38), les éléments de séparation (85) de l'au moins une unité de séparation (82a, 82b ; 82) pénètrent axialement entre les unités d'embrayage (20) correspondantes.

3. Agencement d'accouplement (1) selon la revendication 1 ou 2 comprenant un groupe d'unités d'embrayage (45) dans lequel les unités d'embrayage (20) sont sollicitées par l'au moins une unité de transport et de séparation (82a, 82b ; 82) avec des forces axiales en direction opposée les unes des autres, et auquel un support d'unités d'embrayage (10) est associé, qui comprend au moins un évidement (22) pour l'engagement immobile en rotation d'au moins un entraîneur (26) prévu sur l'unité d'embrayage correspondante (20), **caractérisé en ce que** l'au moins une unité de transport et de séparation (82a, 82b ; 82) s'engage au moins avec les éléments de séparation (85) axialement entre les entraîneurs (26) des unités d'embrayage correspondantes (20) dans l'évidement (22) du support d'unités d'embrayage (10).

4. Agencement d'accouplement (1) selon la revendication 1, comprenant au moins une unité de transport et de séparation (82a, 82b ; 82) de l'appareil de transport et de séparation (38) qui dispose d'une pluralité d'éléments de séparation (85), **caractérisé en ce que** l'au moins une unité de transport et de séparation (82a, 82b ; 82) de l'appareil de transport et de séparation (38) comprend au moins une partie de support (83), sur laquelle, en plus de la pluralité d'éléments de séparation (85), également une pluralité d'éléments de transport (27) est reçue, les éléments de séparation (85), tout comme les éléments de transport (27), étant prévus sur une première section circonférentielle avec des distances circonférentielles par rapport aux éléments de séparation (85) et/ou éléments de transport (27) respectivement voisins, qui diffèrent des distances circonférentielles des éléments de séparation (85) ou des éléments de transport (27) sur au moins une autre section circonférentielle de la partie de support (83).

5. Agencement d'accouplement (1) selon la revendication 1, **caractérisé en ce que** l'appareil de transport et de séparation (38) est muni d'au moins une paires d'unités de transport et de séparation (87), les unités de transport et de séparation individuelles (82a, 82b) de la paire d'unités de transport et de séparation respective (87) étant des images miroir l'une de l'autre par rapport à un plan médian (4) s'étendant transversalement à un axe central (2), axialement au centre entre la paire d'unités de transport et de séparation (87).

6. Agencement d'accouplement (1) selon la revendication 1, **caractérisé en ce que** l'au moins un aubage (35) s'étend par rapport à un plan médian axial (E) de la partie de support (83) de l'au moins une unité de transport et de séparation (82a, 82b ; 82) dans une première direction axiale au moins essentiellement aussi loin que dans une deuxième direction axiale opposée à celle-ci.

7. Agencement d'accouplement (1) selon la revendication 1, **caractérisé en ce que** l'au moins un aubage (35) s'étend par rapport à un plan médian axial (E) de la partie de support (83) de l'au moins une unité de transport et de séparation (82a, 82b ; 82) dans une première direction axiale au moins essentiellement plus loin que dans une deuxième direction axiale opposée à celle-ci.

8. Agencement d'accouplement (1) selon la revendication 1, **caractérisé en ce que** l'au moins une unité de transport et de séparation (82a, 82b ; 82) de l'appareil de transport et de séparation (38) utilise l'aubage (35) de l'au moins un élément de transport (28) par application radiale de l'aubage (35) sur le support d'unités d'embrayage côté entraînement (10) ou sur au moins une unité d'embrayage côté entraînement (20) pour le centrage de l'au moins une unité de transport et de séparation (82a, 82b ; 82) par rapport au boîtier d'embrayage (3).

9. Agencement d'accouplement (1) selon la revendication 1, **caractérisé en ce que** l'au moins une unité de transport et de séparation (82a, 82b ; 82) de l'appareil de transport et de séparation (38) est munie à chaque fois d'au moins une paire d'éléments de séparation (88) comprenant des éléments de séparation (85) croisés entre eux, de telle sorte qu'au moins à chaque fois un élément de séparation (85) fait saillie par rapport au plan médian axial (E) de la partie de support (83) de l'au moins une unité de transport et de séparation (82a, 82b ; 82) en direction d'une des deux unités structurelles voisines (20) et à chaque fois au moins un autre élément de séparation (85) fait saillie par rapport au plan médian axial (E) de la partie de support (83) de l'au moins une unité de transport et de séparation (82a, 82b ; 82) en direction de l'autre des deux unités structurelles voisine (20).

10. Agencement d'accouplement (1) selon la revendication 1, **caractérisé en ce qu'**un agencement d'entraînement (70) comprenant au moins un passage d'écoulement (34), qui s'engage d'une part dans un évidement correspondant (68) du support d'unités d'embrayage côté entraînement (10) et d'autre part dans un évidement correspondant (66) de l'appareil de pression (30), est associé aux éléments de transport (27) pour l'établissement d'une liaison immobile en rotation avec le support d'unités d'embrayage côté entraînement (10) et/ou avec l'appareil de pression (30) .

11. Agencement d'accouplement (1) selon la revendication 1, **caractérisé en ce que** le support d'unités d'embrayage côté entraînement (10) entoure au moins partiellement l'au moins une unité de transport et de séparation (82a, 82b ; 82) de l'appareil de transport et de séparation (38).

12. Agencement d'accouplement (1) selon la revendication 1, **caractérisé en ce que** l'au moins une unité de transport et de séparation (82a, 82b ; 82) de l'appareil de transport et de séparation (38) est agencée radialement à l'intérieur des unités d'embrayage (20, 40) du dispositif d'embrayage (90).

13. Agencement d'accouplement (1) selon la revendication 4, **caractérisé en ce que** la partie de support (83) de l'au moins une unité de transport et de séparation (82a, 82b ; 82) de l'appareil de transport et de séparation (38) entoure un axe central (2) du boîtier d'embrayage (3) sous une forme annulaire.
